# EUROPÄISCHE PATENTSCHRIFT

(11) **EP 4 058 232 B1**
(45) Veröffentlichungstag und Bekanntmachung des Hinweises auf die Patenterteilung: **21.01.2026**
(21) Anmeldenummer: 20801289.8
(22) Anmeldetag: 10.11.2020
(51) Int. Cl.: B23K 20/10, B29C 65/08, B06B 1/10, A61B 17/32, B06B 3/00, B26D 7/08

(54) **ULTRASCHALLKOMPONENTE, VORRICHTUNG ZUM BEARBEITEN VON WERKSTÜCKEN UND VERFAHREN ZUM BEARBEITEN VON WERKSTÜCKEN**
ULTRASONIC COMPONENT, DEVICE FOR MACHINING WORKPIECES AND METHOD FOR MACHINING WORKPIECES
COMPOSANT À ULTRASONS, DISPOSITIF D'USINAGE DES PIÈCES ET PROCÉDÉ D'USINAGE DES PIÈCES

(30) Priorität: 15.11.2019 EP 19209532; 18.03.2020 EP 20163891
(43) Veröffentlichungstag der Anmeldung: 21.09.2022
(73) Patentinhaber: Telsonic Holding AG, 9552 Bronschhofen (CH)
(72) Erfinder: SOLENTHALER, Peter, 9543 St. Margarethen (CH)
(74) Vertreter: Hepp Wenger Ryffel AG
(86) Internationale Anmeldenummer: PCT/EP2020/081672
(87) Internationale Veröffentlichungsnummer: WO 2021/094329

(56) Entgegenhaltungen:
- EP-B1- 1 101 577
- CN-U- 208 246 950

## Beschreibung

Die Erfindung betrifft eine Ultraschallkomponente, insbesondere eine Sonotrode oder einen Booster, eine Vorrichtung und ein Verfahren zum Bearbeiten von Werkstücken mit den Merkmalen der Oberbegriffe der unabhängigen Patentansprüche (siehe, z.B CN 208 246 950 U).

Es ist bekannt, Werkstücke durch Einleiten von Ultraschallschwingungen zu bearbeiten. Typische Anwendungen sind das Verbinden von Werkstücken durch Schweissen, das Ausschneiden von Werkstücken oder das Behandeln von Pulvern, wie beispielsweise beim Sieben.

Ultraschallschwingungen werden durch einen Konverter erzeugt, der in einer Längsrichtung schwingt. Zum Verbinden von Werkstücken, insbesondere von Werkstücken aus Metall oder Kunststoff, ist es bekannt, Ultraschallschwingungen in einer Richtung parallel zur Oberfläche der Werkstücke in diese einzuleiten.

Aus WO 95/23668 sind ein Verfahren und eine Vorrichtung zum Verschweissen von Metallteilen bekannt, bei denen ein Sonotrodenkörper in Drehschwingungen versetzt wird. Ein Nachteil dieser Anordnung besteht darin, dass trotz der erzeugten Drehschwingung immer noch longitudinale Komponenten vorhanden sind, welche zu einer Beschädigung des Werkstücks oder zu einer unerwünschten Dämpfung führen können.

Die Erzeugung von torsionalen Schwingungen durch Einleiten von longitudinalen Schwingungen ist ausserdem auch aus US 4,663,556, US 5,662,766, EP 1 103 238, US 2006/004396 oder US 2011/278988 bekannt.

In WO 2012/069413 A1 wurde daher vorgeschlagen, eine Sonotrode so auszubilden und anzuregen, dass die gesamte Sonotrode zu einer Torsionsschwingung mit vernachlässigbar kleinem Längsschwingungsanteil anregbar ist. Zu diesem Zweck werden Schwingungen tangential zum Sonotrodenkörper eingeleitet. Mit dieser Lösung lassen sich longitudinale Komponenten vermeiden und gute Schweissresultate erzielen. Die Konstruktion ist allerdings verhältnismässig aufwendig.

Es ist daher die Aufgabe der vorliegenden Erfindung, die Nachteile des Bekannten zu vermeiden, insbesondere eine Ultraschallkomponente, insbesondere eine Sonotrode, eine Vorrichtung und ein Verfahren zum Bearbeiten von Werkstücken zu schaffen, bei denen eine Schwingung in eine Richtung parallel zur Oberfläche des Werkstücks mit möglichst geringem longitudinalem Anteil erzeugbar ist, welche einfach und kostengünstig herstellbar sind und welche im Betrieb zuverlässig sind.

Erfindungsgemäss werden diese Aufgaben mit einer Ultraschallkomponente, einer Vorrichtung und einem Verfahren mit den Merkmalen der unabhängigen Ansprüche gelöst.

Die erfindungsgemässe Ultraschallkomponente dient zum Bearbeiten von Werkstücken mit Ultraschallschwingungen. Die Ultraschallkomponente ist typischerweise eine Sonotrode oder ein Booster. Die Ultraschallkomponente weist einen Sonotrodenkörper mit einer Längsachse auf. Der Sonotrodenkörper weist eine Schalleinleitungsseite und eine Bearbeitungsseite auf. Der Einfachheit halber wird nachstehend der Begriff Sonotrodenkörper auch in Zusammenhang mit anderen Ultraschallkomponenten, z. B. einem Booster, verwendet. Die Schalleinleitungsseite ist mit einer ersten Stirnfläche versehen. Die Bearbeitungsseite ist mit einer zweiten Stirnfläche versehen.

Auf der Schalleinleitungsseite sind longitudinale Schwingungen in einer Richtung parallel zur Längsachse in den Sonotrodenkörper einleitbar.

Zwischen der Schalleinleitungsseite und der Bearbeitungsseite ist eine Konversionsstruktur angeordnet. Mit der Konversionsstruktur sind aus den eingeleiteten longitudinalen Schwingungen Querschwingungen mit einer Schwingungskomponente in einer Ebene senkrecht zur Längsachse erzeugbar.

Erfindungsgemäss ist zwischen der Konversionsstruktur und der Bearbeitungsseite eine Dämpfungsstruktur vorgesehen. Die Dämpfungsstruktur ist so ausgebildet, dass damit die longitudinalen Schwingungen auf der Bearbeitungsseite reduziert werden.

In der Konversionsstruktur werden auf an sich bekannte Art und Weise die eingeleiteten longitudinalen Schwingungen zu Querschwingungen konvertiert (vgl. beispielsweise WO 95/23668). Mit der Dämpfungsstruktur wird sichergestellt, dass longitudinale Schwingungen nicht oder höchstens in einem vernachlässigbaren Umfang auf die Bearbeitungsseite übertragen werden. Die Dämpfungsstruktur ist so ausgebildet, dass in Querrichtung gesehen eine möglichst geringe Dämpfung vorliegt, sodass die Querschwingungen möglichst ungedämpft auf die Bearbeitungsseite übertragen werden.

Gemäss einer bevorzugten Ausführungsform ist der Sonotrodenkörper als Hohlkörper ausgebildet. Es ist aber auch denkbar, den Sonotrodenkörper teilweise oder ganz als Vollkörper auszubilden. Insbesondere kann auch je nach geplanter Anwendung ein Hohlkörper oder ein voller Körper bevorzugt sein.

Bevorzugt ist der Sonotrodenkörper rotationssymmetrisch ausgebildet, insbesondere mit einem kreisförmigen Querschnitt. In diesem Fall sind die Querschwingungen insbesondere torsionale Schwingungen. Alternativ dazu kann der Sonotrodenkörper auch nicht rotationssymmetrisch ausgebildet sein und beispielsweise einen ellipsenförmigen Querschnitt aufweisen.

Es ist aber auch denkbar, den Sonotrodenkörper in Form eines rechteckigen Blocks auszubilden. In diesem Fall sind die Querschwingungen transversale Schwingungen. Solche rechteckigen Sonotrodenkörper sind insbesondere als Schneidmesser oder längliche Schweisssonotroden, beispielsweise zum Verbinden und/oder Ausschneiden von Stücken aus Folienbahnen, verwendbar.

Torsionssonotroden sind beispielsweise zum Verschweissen von Kunststoffteilen oder Metallteilen einsetzbar. Typische Anwendungen können das Einschweissen von Sensorhaltern aus Kunststoff in Stossstangen von Automobilen oder das Verschweissen von Litzen untereinander oder von Litzen auf Anschlussteile sein. Grundsätzlich ist die Anwendung der erfindungsgemässen Ultraschallkomponente aber nicht auf bestimmte Einsatzgebiete beschränkt.

Wenn der Sonotrodenkörper rotationssymmetrisch und insbesondere kreisförmig ausgebildet ist, weist er typischerweise einen Durchmesser von weniger als einem Viertel der longitudinalen Wellenlänge auf, d. h. bei einer Frequenz von 20 kHz typischerweise weniger als 60 mm, bevorzugt weniger als 50 mm und besonders bevorzugt etwa 25 mm bis 35 mm auf. Es hat sich gezeigt, dass bei solchen, verhältnismässig geringen Durchmessern besonders stabile Schwingungsverhalten erzielbar sind. Typischerweise werden Ultraschallschwingungen mit einer Frequenz von 15 kHz bis 50 kHz, bevorzugt von 25 kHz bis 35kHz eingeleitet.

Die Konversionsstruktur ist bevorzugt in Form von Materialaussparungen an einer Aussenfläche des Sonotrodenkörpers ausgebildet. Die Materialaussparungen können sich entlang einer Schraubenlinie erstrecken. Insbesondere können die Materialaussparungen in Form von Konversionsschlitzen ausgebildet sein. Die Anzahl der Konversionsschlitze kann im Bereich von 3 bis 12 liegen und beträgt bevorzugt 6. Es ist aber auch denkbar, Materialaussparungen in Form von einzelnen Löchern auf einer Schraubenlinie vorzusehen.

Die Schraubenlinie kann mit einer konstanten Steigung oder mit einer sich veränderlichen Steigung angeordnet sein. Im Fall einer sich veränderlichen Steigung sind die Materialaussparungen entlang einer Kurve mit einer Krümmung auf der Aussenfläche des Sonotrodenkörpers angeordnet. Die Schraubenlinie hat bevorzugt einen Winkel von etwa 45° bezogen auf die Längsachse des Sonotrodenkörpers.

Typischerweise sind die Konversionsstruktur und die Dämpfungsstruktur als separate, voneinander getrennte Strukturen ausgebildet. Es ist aber auch denkbar, eine sich entlang der Achse fortsetzende Struktur vorzusehen, die in einem ersten Abschnitt als Transformationsstruktur und in einem zweiten Abschnitt als Dämpfungsstruktur wirkt. Insbesondere ist es bei sich mit einer veränderlichen Steigung entlang einer Kurve erstreckenden Konversionsstrukturen denkbar, dass die Steigung so weit abnimmt, dass die Struktur in einen Bereich ausläuft, der in einer Ebene senkrecht zur Achse verläuft und dort eine Dämpfungsstruktur bildet.

Alternativ zu Materialaussparungen ist es auch denkbar, die Konversionsstruktur in Form von Materialanhäufungen an der Aussenfläche und/oder an einer Innenfläche des Sonotrodenkörpers auszubilden. Insbesondere können solche Materialanhäufungen bei Sonotrodenkörpern vorgesehen werden, welche durch additive Fertigungsverfahren hergestellt sind. Insbesondere bei Anwendungen, bei denen hohe Anforderungen an Hygiene gestellt werden, kann dies vorteilhaft sein. Beispielsweise wird durch derartige Materialanhäufungen anstelle von Öffnungen die Ablagerung von Bakterien oder der Durchtritt von Bakterien oder Schmutz bei Verpackungsanwendungen vorteilhaft reduziert.

Die Materialaussparungen können sich im Fall eines Hohlkörpers durch die ganze Wand des Sonotrodenkörpers hindurch erstrecken. Es ist aber auch denkbar, die Materialaussparungen nur als Vertiefungen auf der Aussenfläche eines Sonotrodenkörpers vorzusehen, insbesondere im Zusammenhang mit einem nicht als Hohlkörper ausgebildeten Sonotrodenkörper. Es sind auch Konversionsstrukturen mit einer Kombination von Materialaussparungen und Materialanhäufungen oder Kombinationen von Materialaussparungen unterschiedlicher Form von wie vorstehend beschrieben denkbar.

Die Dämpfungsstruktur ist erfindungsgemäß durch eine Materialschwächung im Sonotrodenkörper gebildet. Dabei kann es sich bevorzugt um eine Materialschwächung in Form von Dämpfungsschlitzen handeln. Die Dämpfungsschlitze erstrecken sich erfindungsgemäß in einer Richtung senkrecht zur Längsachse des Sonotrodenkörpers. Aufgrund der Dämpfungsschlitze ist die Schalleinleitungsseite mit der Bearbeitungsseite nur noch über zwischen den Dämpfungsschlitzen angeordnete Stege verbunden. Diese Stege sind stabil und übertragen die Querschwingungen. Gleichzeitig ist aufgrund des reduzierten oder fehlenden Materials im Bereich der Dämpfungsschlitze die Übertragung von longitudinalen Schwingungen von der Schalleinleitungsseite auf die Bearbeitungsseite weitgehend unterbunden. Die Dämpfungsstruktur hat eine Filterfunktion für die longitudinalen Schwingungen, sodass nur Schwingungen mit Querkomponenten übertragen werden. Es ist auch denkbar, mehrere Reihen von Dämpfungsschlitzen vorzusehen. Die Anzahl der Dämpfungsschlitze kann im Bereich von 3 bis 12 liegen und beträgt bevorzugt 6.

Entlang der Längsachse verändern sich die Anteile zwischen longitudinalen und querschwingenden Schwingungskomponenten. Die Dämpfungsstruktur ist bevorzugt im Bereich eines Amplitudenmaximums der Querschwingungen bzw. eines maximalen Anteils der Querschwingungen angeordnet. Durch die Konversionsstruktur werden die eingeleiteten Longitudinalschwingungen entlang der Längsachse des Sonotrodenkörpers in Querschwingungen umgewandelt. Dabei verändern sich die Anteile der longitudinalen Schwingungen und der Querschwingungen entlang der Längsachse.

Die Konversionsstruktur erstreckt sich typischerweise über eine Länge in Längsrichtung der Ultraschallkomponente, die etwa 10 % bis 30 %, bevorzugt etwa 15 % bis 25 % der Länge des Sonotrodenkörpers erstreckt. Es hat sich gezeigt, dass mit einer derartigen Länge eine besonders optimale Konversion von longitudinalen Schwingungen in Querschwingungen erzielbar ist.

Ausserdem ist die Konversionsstruktur bevorzugt in Längsrichtung gesehen aussermittig zwischen der Dämpfungsstruktur und der ersten Stirnfläche angeordnet, und zwar näher zur Stirnfläche hin. Dadurch wird zwischen der Konversionsstruktur und der Dämpfungsstruktur ein Zwischenbereich gebildet. In diesem Zwischenbereich ändert sich in Längsrichtung betrachtet laufend die Verteilung zwischen dem Anteil an longitudinalen Schwingungen und Querschwingungen. Die Länge dieses Zwischenbereichs wird so gewählt, dass im Bereich der Dämpfungsstruktur der Anteil an Querschwingungen maximiert ist.

In einer bevorzugten Ausführungsform ist ausserdem auf der Schalleinleitungsseite eine Vertiefung in der ersten Stirnfläche angeordnet. Die Vertiefung ist mit einer Koppelfläche zum Verbinden des Sonotrodenkörpers mit einer Schwingfläche eines Ultraschallkonverters versehen. Auf diese Art und Weise kann eine optimierte Einkopplung der longitudinalen Schwingungen erzielt werden. Insbesondere kann eine Anordnung wie in der pendenten Anmeldung EP 18210827.4 verwendet werden, deren Inhalt durch Querverweis zum Gegenstand der vorliegenden Anmeldung gemacht wird.

Gemäss einem weiteren bevorzugten Ausführungsbeispiel kann an der Aussenfläche des Sonotrodenkörpers benachbart zu einem Bereich mit maximaler Amplitude der Querschwingungen, insbesondere im Bereich der Dämpfungsstruktur, eine Schwingungsmasse vorgesehen sein. Typischerweise erfolgt die Einleitung der Querschwingungen in das Werkstück auf der zweiten Stellfläche der Bearbeitungsseite. Es ist aber auch denkbar, zusätzlich oder alternativ Schwingungen im Bereich einer solchen Schwingungsmasse in Werkstücke einzuleiten.

Der Sonotrodenkörper kann typischerweise einstückig ausgebildet sein und beispielsweise aus Stahl, Titan, Aluminium oder aus einer Keramik bestehen. Es ist aber auch denkbar, mehrteilige Sonotrodenkörper vorzusehen. In diesem Zusammenhang ist es insbesondere denkbar, auch Sonotrodenkörper aus mehreren Teilen aus unterschiedlichen Materialien zu verwenden. Insbesondere ist es denkbar, zwischen der Bearbeitungsseite und der Schalleinleitungsseite im Bereich der Dämpfungsstruktur ein zusätzliches, dämpfendes Material vorzusehen.

Gemäss einer weiteren bevorzugten Ausführungsform kann ausserdem zwischen der ersten Stirnfläche und der Konversionsstruktur eine zusätzliche Entkopplungsstruktur für torsionale Schwingungen vorgesehen sein. Die Entkopplungsstruktur kann insbesondere in Form von Öffnungen oder Vertiefungen im Sonotrodenkörper ausgebildet sein. Insbesondere kann sie ähnlich wie die vorstehend beschriebene Dämpfungsstruktur ausgebildet sein. Mit einer solchen torsionalen Entkopplungsstruktur wird eine Rückkopplung von torsionalen Schwingungen in Richtung der ersten Stirnfläche vermieden.

Gemäss einer weiteren Ausführungsform ist es ausserdem denkbar, im Bereich der Schalleinleitungsseite eine Amplitudentransformation (einen sogenannten Booster) vorzusehen.

Die Erfindung betrifft ausserdem eine Vorrichtung zum Bearbeiten von Werkstücken mittels Ultraschalles. Die Vorrichtung weist wenigstens eine wie vorstehend beschriebene Ultraschallkomponente auf. Ausserdem weist die Vorrichtung einen Konverter zum Betreiben der Ultraschallkomponente und insbesondere zum Einleiten von longitudinalen Schwingungen in die Schalleinleitungsseite der Ultraschallkomponente auf. Die Vorrichtung weist ausserdem eine Aufnahme für ein zu bearbeitendes Werkstück auf. Ausserdem verfügt die Vorrichtung über eine Betätigungsvorrichtung zum Bewegen der Ultraschallkomponente gegen die Aufnahme hin. Damit kann in an sich bekannter Art und Weise ein Werkstück zwischen eine Bearbeitungsfläche der Ultraschallkomponente und der Aufnahme eingeklemmt und mit Ultraschall beaufschlagt werden.

Die Erfindung betrifft schliesslich ein Verfahren zum Bearbeiten von Werkstücken mittels Ultraschalles. Insbesondere wird dabei eine Ultraschallkomponente wie vorstehend beschrieben verwendet. In einem ersten Schritt werden longitudinale Schwingungen an einer Schalleinleitungsseite eines Sonotrodenkörpers der Ultraschallkomponente in die Ultraschallkomponente eingeleitet. Die eingeleiteten longitudinalen Schwingungen werden mittels einer Konversionsstruktur in Querschwingungen mit einer Schwingungskomponente in einer Ebene senkrecht zur Schwingungsrichtung der longitudinalen Schwingungen transformiert.

Diese Querschwingungen werden in ein Werkstück auf einer Bearbeitungsseite der Sonotrode eingeleitet oder in eine weitere Ultraschallkomponente auf der Bearbeitungsseite eines Boosters eingeleitet. Erfindungsgemäss werden die longitudinalen Schwingungen zwischen der Konversionsstruktur und der Bearbeitungsseite mittels einer insbesondere longitudinalen Dämpfungsstruktur reduziert.

Die Erfindung wird nachfolgend anhand der Zeichnungen und in Ausführungsbeispielen näher erläutert. Es zeigen:
- Figur 1: eine schematische Darstellung einer erfindungsgemässen Vorrichtung;
- Figur 2: eine Seitenansicht einer erfindungsgemässen Sonotrode;
- Figur 3: eine perspektivische Darstellung einer ersten alternativen Form einer Sonotrode;
- Figur 4: eine Seitenansicht einer zweiten alternativen Ausführungsform einer Sonotrode;
- Figur 5: eine Seitenansicht einer dritten alternativen Ausführungsform einer Sonotrode;
- Figur 6: eine perspektivische, schematische Darstellung einer vierten alternativen Ausführungsform einer erfindungsgemässen Sonotrode;
- Figur 7: eine Seitenansicht einer fünften alternativen Ausführungsform einer erfindungsgemässen Sonotrode;
- Figur 8: eine Seitenansicht sowie ein Längsschnitt entlang der Ebene D einer weiteren alternativen Ausführungsform einer erfindungsgemässen Sonotrode;
- Figur 9: eine Seitenansicht einer sechsten alternativen Ausführungsform einer erfindungsgemässen Sonotrode mit einem Booster
- Figur 10: eine schematische Darstellung einer siebten Ausführungsform mit kombinierter Konversions- und Dämpfungsstruktur und
- Figur 11: eine schematische Darstellung einer achten Ausführungsform mit einer Zentrierung.

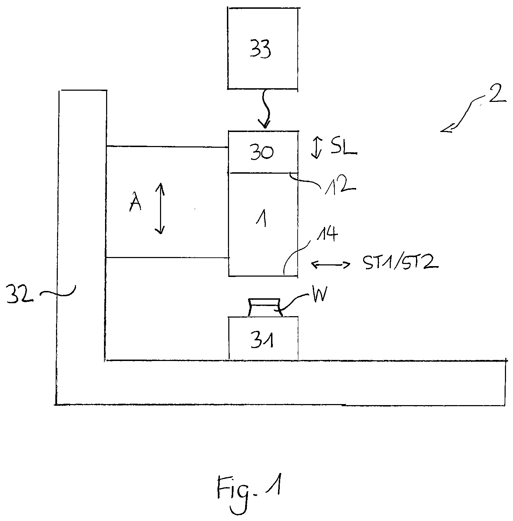

Figur 1 zeigt schematisch eine Vorrichtung 2 zum Bearbeiten von Werkstücken W. Als Werkstücke W sind hier exemplarisch zwei Teile gezeigt, welche miteinander verschweisst werden sollen. Die Vorrichtung 2 weist eine Aufnahme 31 zur Aufnahme der Werkstücke W auf.

Eine Sonotrode 1 ist mittels eines Konverters 30 zur Ultraschallschwingungen anregbar. Der Konverter 30 wird durch einen Ultraschallgenerator 33 zu Longitudinalschwingungen SL in einer longitudinalen Richtung angeregt. In der Sonotrode 1 werden die an einer ersten Stirnfläche 12 eingekoppelten Longitudinalschwingungen SL in Querschwingungen konvertiert, sodass an einer zweiten Stirnfläche 14 Querschwingungen, beispielsweise torsionale Schwingungen ST1 oder transversale Schwingungen ST2, entstehen und in das Werkstück W eingeleitet werden können. Der Stack aus Konverter 30 und Sonotrode 1 ist mittels eines Antriebs in Achsrichtung A bewegbar, sodass die Sonotrode 1 mit der Stirnfläche 14 in Richtung des Werkstücks W bewegt werden kann. Zum Bewegen des Stacks in Achsrichtung A ist typischerweise ein pneumatischer Antrieb 32 vorgesehen. Denkbar sind aber auch Servopressen in an sich bekannter Art und Weise.

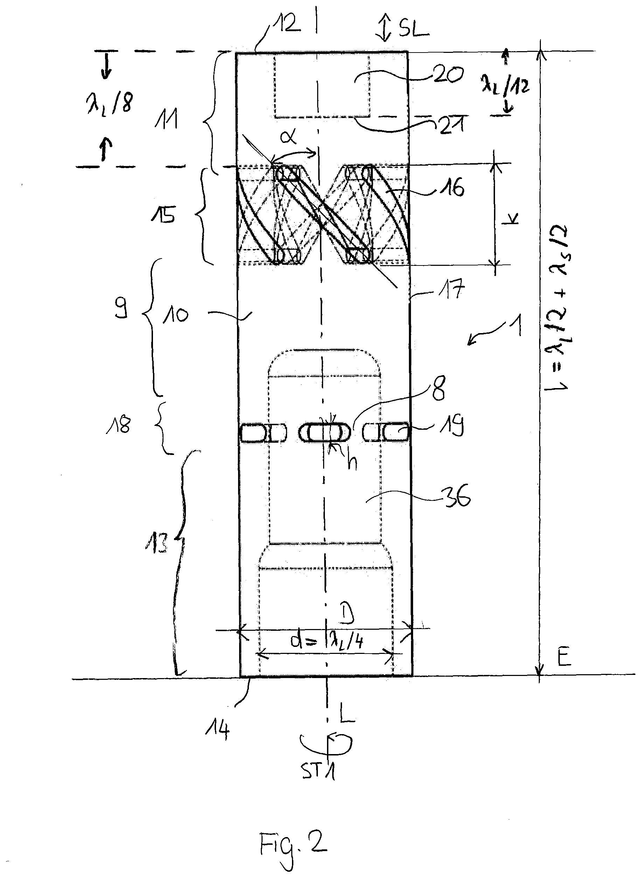

Figur 2 zeigt eine Seitenansicht einer ersten Ausführungsform einer erfindungsgemässen Sonotrode 1. Die Sonotrode 1 weist einen im Wesentlichen zylindrischen Sonotrodenkörper 10 auf. Der Sonotrodenkörper 10 weist eine Schalleinleitungsseite 11 mit einer ersten Stirnfläche 12 und eine Bearbeitungsseite 13 mit einer zweiten Stirnfläche 14 auf. An der ersten Stirnfläche 12 sind longitudinale Schwingungen SL in Längsrichtung L der Sonotrode 1 einleitbar. Zu diesem Zweck weist der Sonotrodenkörper 10 an der ersten Stirnseite 12 eine sacklochartige Vertiefung 20 mit einer Grundfläche 21 auf. Mit der Grundfläche 21 ist ein Konverter verbindbar, sodass longitudinale Schwingungen SL in die Sonotrode 1 einkoppelbar sind. In Längsrichtung L anschliessend an die Schalleinleitungsseite 11 befindet sich eine Konversionsstruktur 15 in Form von Konversionsschlitzen 16. Die Konversionsschlitze 16 sind mit einer Neigung bezogen auf die Längsachse L auf einer Oberfläche 17 des Sonotrodenkörpers 10 angeordnet. Die Konversionsschlitze 16 führen dazu, dass aus den longitudinalen Schwingungen SL, welche auf der Schalleinleitungsseite 11 in die Sonotrode 10 eingeleitet werden, Schwingungen mit einer torsionalen Komponente erzeugt werden. In einem Zwischenbereich 9, welcher in Längsrichtung L an die Konversionsstruktur 15 folgt, bestehen Schwingungen mit sowohl longitudinalen als auch torsionalen Schwingungskomponenten. Der Anteil der einzelnen Schwingungskomponenten variiert in Längsrichtung L.

An den Zwischenbereich 9 schliesst sich ein Dämpfungsbereich 18 an. Der Dämpfungsbereich 18 ist durch Dämpfungsschlitze 19 gebildet, welche sich in Umfangsrichtung entlang der Oberfläche 17 des Sonotrodenkörpers 10 erstrecken. Die Schlitze 19 sind regelmässig über den Umfang des Sonotrodenkörpers 10 angeordnet und durch Stege 8 voneinander getrennt. In Längsrichtung L gesehen nach der Dämpfungsstruktur 18 befindet sich die Bearbeitungsseite 13. Die Stege 8 verbinden den Zwischenbereich 9 mit der Bearbeitungsseite 13. Über die Stege 8 werden torsionale Schwingungskomponenten auf die Bearbeitungsseite 13 übertragen, sodass diese fast nur noch ausschliesslich mit torsionalen Schwingungen ST1 schwingt. Auf der Bearbeitungsseite 13 liegen kaum Schwingungen in Längsrichtung L vor. Die torsionalen Schwingungen ST1 verlaufen in einer Ebene E senkrecht zur Längsachse L.

Der Sonotrodenkörper 10 weist eine totale Länge l auf,. die in Abhängigkeit von Material und Frequenz bestimmt wird. Im hier dargestellten Ausführungsbeispiel ist die Länge l gleich der Summe einer halben longitudinalen Wellenlänge und einer halben torsionalen Wellenlänge.

Die Konversionsschlitze 16 weisen in Längsrichtung L eine Länge k auf, die bevorzugt im Bereich von D/6 bis D liegt, wobei D der Aussendurchmesser des Sonotrodenkörpers 10 ist. Im hier dargestellten Ausführungsbeispiel ist die Länge k ca. 13 % der Gesamtlänge l des Sonotrodenkörpers 10. Die Konversionsschlitze 16 verlaufen unter einem Winkel α von ungefähr 45° bezogen auf die Längsachse L.

Der Zwischenbereich 9 weist in der Ausführungsform gemäss Figur 2 typischerweise eine Länge auf, die kleiner ist als eine halbe longitudinale Wellenlänge. Die Bearbeitungsseite 13 weist eine Länge von typischerweise einer halben torsionalen Wellenlänge auf. Die Konversionsschlitze 16 beginnen typischerweise in einem Abstand von ungefähr einem Achtel der longitudinalen Wellenlänge von der ersten Stirnfläche 12 und/oder in einem Abstand von maximal einem Zwölftel der longitudinalen Wellenlänge von der Koppelfläche 21 zum Einleiten von Longitudinalschwingungen SL.

In Längsrichtung L betrachtet weisen die Dämpfungsschlitze 19 typischerweise eine Höhe h von 1 mm bis 10 mm auf. Ähnliche Dimensionen gelten auch für die nachfolgenden Ausführungsbeispiele.

Auf der Bearbeitungsseite 13 weist der Sonotrodenkörper 10 eine Ausnehmung 36 auf.

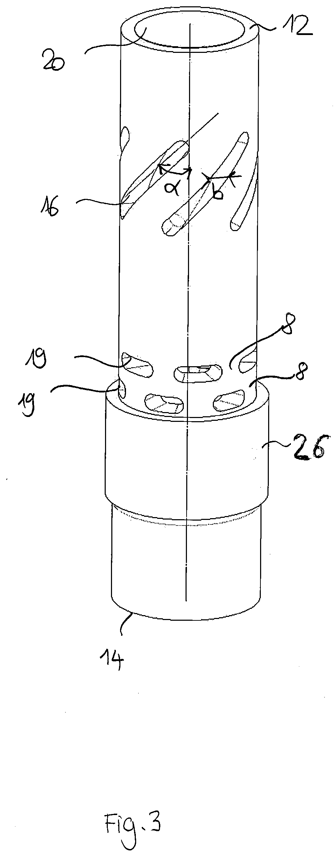

Figur 3 zeigt eine erste alternative Sonotrode 1 in einer perspektivischen Darstellung. Gleiche Bezugszeichen bezeichnen gleiche Bauteile. Die Konversionsschlitze 16 befinden sich auf Schraubenlinien S, welche unter einem Winkel α bezogen auf die Längsachse L verlaufen. Die Schraubenlinie S hat hier eine veränderliche Steigung, sodass der Winkel α nicht in jedem Punkt der Konversionsschlitze 16 gleich ist. Im Ausführungsbeispiel gemäss den Figuren 2 und 3 sind jeweils sechs Konversionsschlitze 16 angeordnet. In Umfangsrichtung gesehen weisen die Konversionsschlitze 16 eine Breite b von 1 mm bis 10 mm auf.

Der Sonotrodenkörper 10 gemäss Figuren 2 und 3 ist als teilweiser Hohlkörper ausgebildet. Der Sonotrodenkörper 10 weist einen kreisringförmigen Querschnitt auf. Der Querschnitt weist einen Aussendurchmesser D von typischerweise einem Viertel der longitudinalen Wellenlänge und einen insbesondere vom bearbeiteten Werkstück abhängigen Innendurchmesser d von etwa einem Achtel der longitudinalen Wellenlänge auf. Die Konversionsschlitze 16 sind als Vertiefungen ausgebildet und die Dämpfungsschlitze 19 erstrecken sich durch die ganze Wand des hohlzylindrischen Sonotrodenkörpers 10.

Im Ausführungsbeispiel gemäss Figuren 2 und 3 sind im Umfangsrichtung gesehen sechs Dämpfungsschlitze 19 angeordnet. Die Länge der Dämpfungsschlitze 19 und der Stege 8 in Umfangsrichtung ist in diesem Ausführungsbeispiel etwa gleich gross. Die Stege 8 und die Dämpfungsschlitze 19 erstrecken sich jeweils zusammen über einen Winkelbereich von ca. 60°. Die Mittelpunkte der Dämpfungsschlitze 19 gemäss Figur 2 fluchten in Richtung der Längsachse L mit den Mittelpunkten der Konversionsschlitze 16; in alternativen Ausführungsbeispielen können die genannten Mittelpunkte natürlich auch bezüglich der Längsachse L gegeneinander versetzt sein. In Figur 3 sind zwei Reihen von Dämpfungsschlitzen vorgesehen, die bezogen aufeinander in Umfangsrichtung betrachtet um etwa 30° versetzt sind. Im Unterschied zu Figur 2 weist die Sonotrode 1 nach Figur 3 ein zusätzliches umlaufendes Transformationsstück 26 auf.

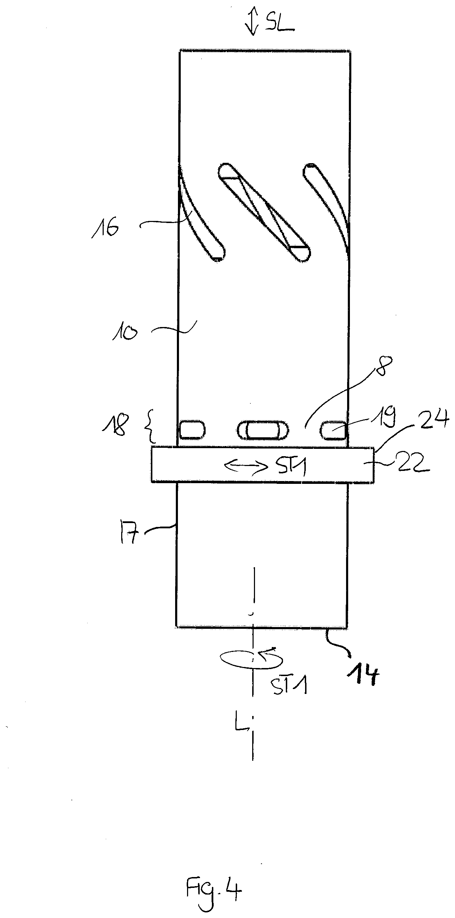

Figur 4 zeigt eine Sonotrode 1 einer zweiten alternativen Ausführungsform in einer Seitenansicht. Die Sonotrode 1 gemäss Figur 4 hat einen Sonotrodenkörper 10, der im Wesentlichen dem Sonotrodenkörper 10 gemäss Figur 2 entspricht. Insbesondere sind auch hier Konversionsschlitze 16 vorgesehen, welche longitudinale Schwingungen SL in torsionale Schwingungen ST1 konvertieren. Die torsionalen Schwingungen ST1 weisen eine tangentiale Schwingungsrichtung um die Längsachse L auf. Die Verteilung der longitudinalen und torsionalen Komponenten hängt von der Anordnung und Grösse der Konversionsschlitze 16 ab. Die Struktur 18 ist in Längsrichtung L gesehen an einer Stelle angeordnet, an der der Anteil an torsionalen Schwingungen ST1 möglichst gross wird. Mittels FEM-Berechnungen kann der Schwingungsverlauf auf dem Sonotrodenkörper 10 ermittelt werden. Es können danach gezielt Dämpfungsschlitze 19 und eine Schwingungsmasse 22 an derjenigen Stelle angebracht werden, an der die torsionale Komponente am grössten sein soll.

Im Unterschied zu Figur 2 ist bei der Sonotrode 1 gemäss Figur 4 zusätzlich eine Schwingungsmasse 22 vorgesehen. Die Schwingungsmasse 22 verläuft in Umfangsrichtung gesehen um den Sonotrodenkörper 10 herum. Die Schwingungsmasse 22 ist benachbart zur Dämpfungsstruktur 18 angeordnet. Aufgrund der Schwingungsmasse 22 bestehen an von der Oberfläche 17 radial vorstehenden Oberflächenbereichen 24 der Schwingungsmasse 22 zusätzliche torsionale Schwingungen. Entsprechend können Schwingungen in Werkstücke eingeleitet werden, indem Werkstücke in Kontakt mit der zweiten Stirnfläche 14 oder in Kontakt mit der Oberfläche 24 der Schwingungsmasse 22 gebracht werden. Dazu kann die Oberfläche 24 mit geeigneten Konturen oder Vorsprüngen versehen werden.

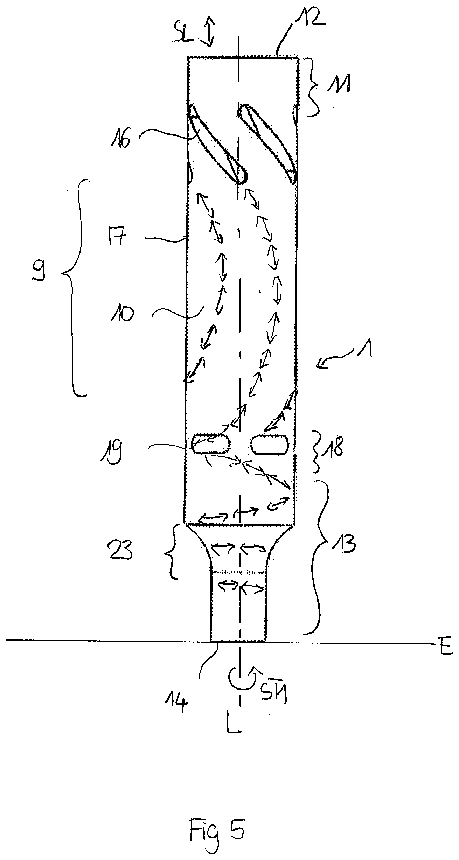

Figur 5 zeigt eine weitere Ausführungsform einer erfindungsgemässen Sonotrode 1. Der Sonotrodenkörper 10 in der Ausführungsform gemäss Figur 5 ist im Gegensatz zu den Figuren 2 bis 4 als voller Körper ausgebildet. Die Konversionsschlitze 16 und die Dämpfungsschlitze 19 sind entsprechend nicht als durchgehende Schlitze sondern nur als Vertiefungen auf der Oberfläche 17 des Sonotrodenkörpers 10 ausgebildet. Im Übrigen bezeichnen gleiche Bezugszeichen in Figur 5 die gleichen Komponenten wie in den Figuren 2, 3 und 4. Im Unterschied zu den Ausführungsformen gemäss Figuren 2, 3 und 4 weist der Sonotrodenkörper 10 ausserdem auf der Bearbeitungsseite 13 eine Verjüngung 23 auf. Im Bereich der Verjüngung 23 reduziert sich der Aussendurchmesser des Sonotrodenkörpers 10 entlang der Längsachse.

In Figur 5 ist ausserdem schematisch der Verlauf der Schwingungen innerhalb des Sonotrodenkörpers 10 gezeigt.

Auf der Schalleinleitungsseite 11 werden Longitudinalschwingungen SL eingeleitet, welche in Längsrichtung L verlaufen. Aufgrund der Konversionsschlitze 16 ergibt sich im Bereich der Konversionsstruktur 15 eine Schwingung mit zunehmender torsionaler Komponente.

Im Zwischenbereich 9 nimmt der torsionale Anteil an den Schwingungen zuerst zu und dann wieder ab, sodass die torsionalen Schwingungen ungefähr in der Mitte des Zwischenbereichs 9 minimal sind. Dort liegt ein torsionaler Schwingungsknoten vor. Gegen die Dämpfungsstruktur 18 hin nimmt die torsionale Komponente der Schwingungen dann wieder zu. Ungefähr im Bereich der Dämpfungsstruktur 18 ist die torsionale Schwingung maximal.

Aufgrund der Dämpfungsschlitze 19 werden auf die Bearbeitungsseite 13 kaum mehr longitudinale Schwingungsanteile übertragen, sodass im Bereich der Bearbeitungsseite 13 hauptsächlich torsionale Schwingungen ST1 mit einer Schwingungsrichtung tangential um die Längsachse L und in einer Ebene E senkrecht zur Längsachse L bestehen.

Mit den erfindungsgemässen Sonotroden, insbesondere den Sonotroden gemäss den Figuren 2 bis 5, lassen sich Verhältnisse zwischen torsionalen und linearen Amplituden von mehr als 1:1, bevorzugt mehr als 2:1, beispielsweise 2:1, 3:1 oder 4:1, erzielen.

Dank der Einkopplung der longitudinalen Schwingungen LS im Bereich der Vertiefung 20 gemäss Figur 2 und 3 lässt sich ausserdem eine Amplitudenübersetzung von 1 zu 4,3 erzielen.

Je nach verwendeter Ultraschallfrequenz können selbstverständlich die Sonotroden skaliert werden.

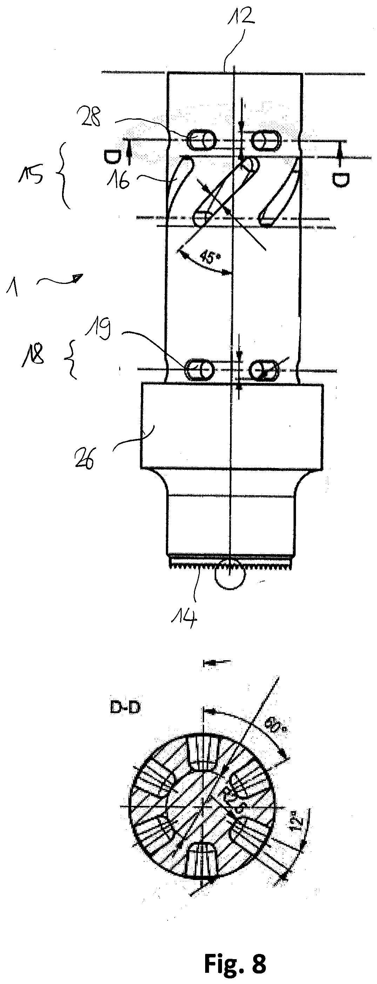

Figur 8 zeigt eine weitere erfindungsgemässe Sonotrode 1 in einer Seitenansicht sowie (unten) in einem Schnitt senkrecht zur Längsachse entlang der Ebene D-D. Die Sonotrode 1 ist ähnlich aufgebaut wie die vorstehend beschriebenen Sonotroden. Sie weist insbesondere ebenfalls eine Konversionsstruktur 15 mit Konversionsschlitzen 16 sowie Dämpfungsschlitze 19 in einem Dämpfungsbereich 18 auf. Ebenso ist ähnlich wie in Figur 3 gezeigt ein Transformationsstück 26 vorgesehen. Zusätzlich zu den vorstehend beschriebenen Ausführungsformen weist die Sonotrode 1 gemäss Figur 8 eine torsionale Entkopplungszone 28 auf. Die torsionale Entkopplungszone 28 ist zwischen der Konversionsstruktur 15 und der ersten Stirnfläche 12 angeordnet.

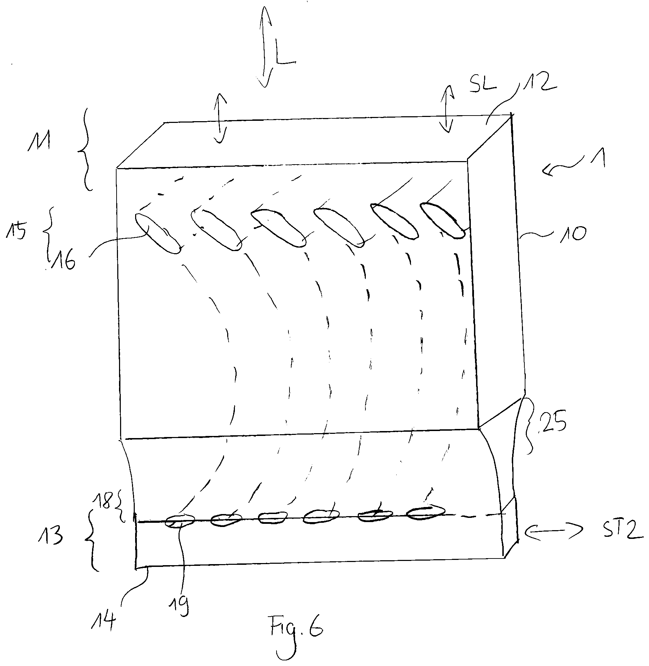

In Figur 6 ist eine weitere alternative Ausführungsform einer Sonotrode 1 gezeigt. Hier ist der Sonotrodenkörper 10 rechteckig ausgebildet. Longitudinale Schwingungen SL werden an der ersten Stirnseite 12 eingeleitet. Durch Konversionsschlitze 16 im Bereich einer Konversionsstruktur 15 werden die longitudinalen Schwingungen SL ähnlich wie im Zusammenhang mit den Figuren 2 bis 5 beschrieben in Schwingungen mit einer quer verlaufenden Schwingungskomponente konvertiert. Aufgrund der rechteckigen Ausführung des Sonotrodenkörpers 10 werden hier transversale Schwingungen ST2 erzeugt, welche im Wesentlichen linear in einer Schwingungsrichtung senkrecht zur Schwingungsrichtung L der longitudinalen Schwingung SL verlaufen. Der Sonotrodenkörper 10 weist gegen die zweite Stirnfläche 14 hin eine Verjüngung 25 auf. In einem Dämpfungsbereich 18 sind auch hier Dämpfungsschlitze 19 vorgesehen, welche zwischen der Bearbeitungsseite 13 und der Konversionsstruktur 15 angeordnet sind.

Die Sonotrode gemäss Figur 6 ist typischerweise als "blade" eingesetzt. Mittels solcher Sonotroden 1 lassen sich Materialbahnen, beispielsweise Folienbahnen, miteinander verschweissen und trennen. Typischerweise können solche Sonotroden bei der Herstellung von Verpackungen eingesetzt werden.

Die Sonotroden aus Figuren 2 bis 5 werden hingegen typischerweise zum Verschweissen von Kunststoffteilen verwendet, wenn die Teile mit der zweiten Stirnfläche 14 in Kontakt gebracht werden. Es ist aber auch denkbar, Metallteile, beispielsweise Litzen, zu verschweissen, die in Kontakt mit einer Oberfläche 24 der Schwingungsmasse 22 der Ausführungsform gemäss Figur 4 in Kontakt gelangen.

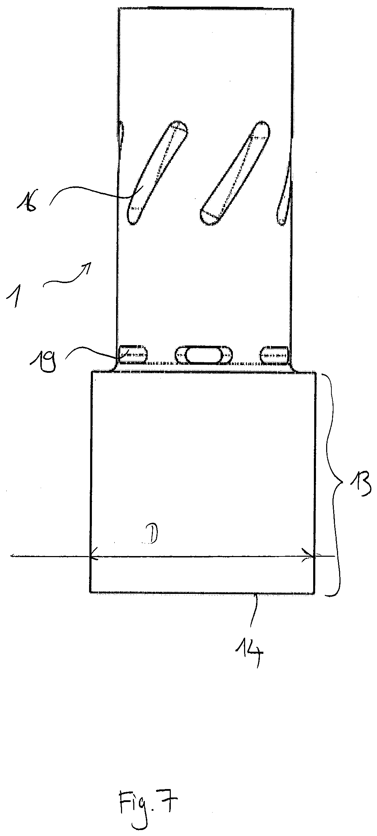

Figur 7 zeigt eine weitere Ausführungsform einer Sonotrode 1. Hier ist der Aussendurchmesser D der Bearbeitungsseite vergrössert.

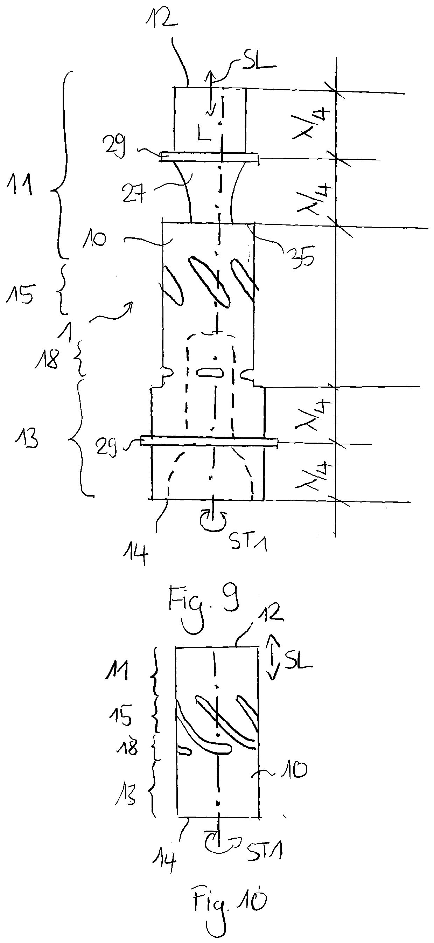

Figur 9 zeigt eine weitere Ausführungsform einer erfindungsgemässen Sonotrode 1 mit einem Sonotrodenkörper 10. Gleiche Bezugszeichen bezeichnen gleiche Elemente wie in den vorhergehenden Ausführungsformen. Im Unterschied zu den vorhergehenden Ausführungsformen ist die Sonotrode 1 im Bereich der Schalleinleitungsseite 11 zusätzlich mit einem Booster 27 zur Amplitudentransformation versehen. In diesem Ausführungsbeispiel sind Booster und Sonotrode einstückig gefertigt. Die Schalleinleitungsseite 11 wird durch das Ende des Boosters definiert. Der Aussendurchmesser verringert sich entlang der Längsachse L im Bereich des Boosters 27 kontinuierlich. Er vergrössert sich im Bereich einer Grenzfläche 35 sprunghaft auf den Aussendurchmesser des eigentlichen Sonotrodenkörpers 10. Die Grenzfläche 35 ist in einem Abstand von λ/2 von der ersten Stirnfläche 12 angeordnet. Es ist aber auch denkbar, einen separaten Booster vorzusehen und mit der Sonotrode zu verbinden. In diesem Fall befindet sich die Schalleinleitungsseite am Ende des Sonotrodenkörpers 10.

Zusätzlich ist ein Befestigungsflansch 29 zur Befestigung der Sonotrode 10 in einer Ultraschallbearbeitungsanordnung gezeigt. Der Befestigungsflansch 29 ist in einem Abstand λ/4 bezogen auf die erste Stirnfläche 12 und bezogen auf die Grenzfläche 35 angeordnet. Die Wellenlänge λ bezieht sich dabei auf die longitudinale Schwingung SL.

Auf der Bearbeitungsseite 13 ist ebenfalls ein Befestigungsflansch 29 zur Befestigung des Sonotrodenkörpers 10 in einer Bearbeitungsanlage gezeigt. Auch dieser Befestigungsflansch 29 im Bereich der Bearbeitungsseite 13 ist in einem Abstand von λ/4 bezogen auf die zweite Stirnseite 14 angeordnet. Er befindet sich ausserdem in einem Abstand von λ/4 von der Dämpfungsstruktur 18. Im Bereich der Bearbeitungsseite 13 beziehen sich die angegebenen Wellenlängen auf die torsionale Schwingung ST1.

Zwischen der Dämpfungsstruktur und der Bearbeitungsseite 13 vergrössert sich der Aussendurchmesser des Sonotrodenkörpers. Dies dient der Anpassung an die Dimension des zu bearbeitenden Werkstücks.

In Figur 10 ist noch eine weitere Ausführungsform schematisch dargestellt. Der Sonotrodenkörper weist wiederum eine Bearbeitungsseite 13, eine Schalleinleitungsseite 11 sowie eine Konversionsstruktur 15 und eine Dämpfungsstruktur 18 auf. In der Ausführungsform gemäss Figur 10 gehen die Konversionsschlitze, welche die Konversionsstruktur 15 bilden, ununterbrochen in Dämpfungsschlitze über, welche die Dämpfungsstruktur 18 bilden. Auf diese Weise kann die Bauhöhe der Sonotrode reduziert werden.

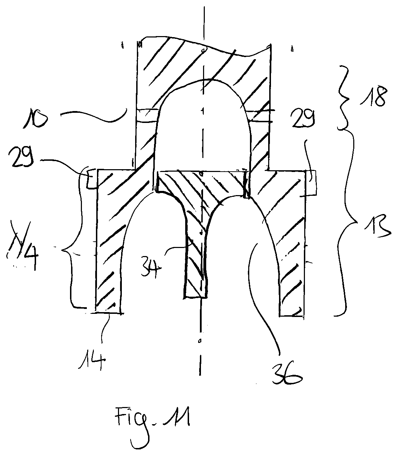

Figur 11 zeigt eine Weiterbildung der Ausführungsform aus Figur 9. Zusätzlich ist eine Zentrierung 34 zur Zentrierung des zu bearbeitenden Werkstücks gezeigt. Die Zentrierung 34 ist mit einem Aussengewinde (nicht gezeigt) in einem Innengewinde in der Ausnehmung 36 festgeschraubt. Die Befestigung befindet sich in einem torsionalen Schwingungsnullpunkt bei λ/4, so dass möglichst keine Schwingungen auf die Zentrierung 34 übertragen werden. Aufgrund der Dämpfungsstrukturen 18 liegen auch keine longitudinalen Schwingungen im Bereich der Befestigung der Zentrierung 34 vor. Die Zentrierung 34 kann im Übrigen bevorzugt wie in DE 10 204 212 313 gezeigt ausgestaltet sein, deren Inhalt durch Querverweis in die vorliegende Anmeldung aufgenommen wird.

## Patentansprüche

1. Ultraschallkomponente, insbesondere Sonotrode (1) oder Booster, zum Bearbeiten von Werkstücken (W) mit Ultraschallschwingungen,
mit einem Körper, insbesondere einem Sonotrodenkörper (10), mit einer Längsachse (L), wobei der Körper, insbesondere der Sonotrodenkörper (10), eine Schalleinleitungsseite (11) mit einer ersten Stirnfläche (12) und eine Bearbeitungsseite (13) mit einer zweiten Stirnfläche (14) aufweist,
wobei auf der Schalleinleitungsseite (11) longitudinale Schwingungen (SL) in einer Richtung parallel zur Längsachse (L) in den Körper, insbesondere den Sonotrodenkörper (10), einleitbar sind,
wobei zwischen der Schalleinleitungsseite (11) und der Bearbeitungsseite (13) eine Konversionsstruktur (15) angeordnet ist, mittels deren aus den longitudinalen Schwingungen (SL) Querschwingungen (ST1; ST2) mit einer Schwingungskomponente in einer Ebene (E) senkrecht zur Längsachse (L) erzeugbar sind,
**dadurch gekennzeichnet, dass** zwischen der Konversionsstruktur (15) und der Bearbeitungsseite (13) eine Dämpfungsstruktur (18) vorgesehen ist, welche die longitudinalen Schwingungen (SL) auf der Bearbeitungsseite (13) reduziert,
wobei die Dämpfungsstruktur (18) durch eine Materialschwächung im Körper, insbesondere im Sonotrodenkörper (10), gebildet ist, wobei die Materialschwächung der Dämpfungsstruktur (18) in Form von Dämpfungsschlitzen (19) ausgebildet ist, welche sich in einer Richtung senkrecht zur Längsachse (L) erstrecken.

2. Ultraschallkomponente (1) nach Anspruch 1, wobei der Körper, insbesondere der Sonotrodenkörper (10), ganz oder teilweise als Hohlkörper ausgebildet ist.

3. Ultraschallkomponente (1) nach Anspruch 1 oder 2, wobei der Körper, insbesondere der Sonotrodenkörper (10), rotationssymmetrisch, insbesondere mit kreisförmigem Querschnitt, ausgebildet ist und die Querschwingungen torsionale Schwingungen (ST) sind.

4. Ultraschallkomponente (1) nach Anspruch 3, wobei der Körper, insbesondere der Sonotrodenkörper (10), einen Aussendurchmesser (D) von weniger als einem Viertel der longitudinalen Wellenlänge aufweist.

5. Ultraschallkomponente (1) nach einem der Ansprüche 1 bis 4, wobei die Konversionsstruktur (15) in Form von Materialaussparungen (16) an der Aussenfläche (17) des Körpers, insbesondere des Sonotrodenkörpers (10), ausgebildet ist, welche sich entlang einer Schraubenlinie (S) erstrecken, insbesondere in Form von Konversionsschlitzen (16), wobei die Schraubenlinie (S) bevorzugt einen Winkel von 45° zur Längsachse (L) aufweist.

6. Ultraschallkomponente (1) nach einem der Ansprüche 1 bis 5, wobei die Dämpfungsstruktur (18) benachbart zu einem Bereich eines maximalen Anteils an Querschwingungen (ST1; ST2) angeordnet ist.

7. Ultraschallkomponente (1) nach einem der Ansprüche 1 bis 6, wobei sich die Konversionsstruktur (15) über eine Länge (k) von ca. 10 % bis 30 %, bevorzugt etwa 10 % bis 20 % der Länge (l) des Körpers, insbesondere des Sonotrodenkörpers (10), erstreckt.

8. Ultraschallkomponente (1) nach einem der Ansprüche 1 bis 7, wobei die Konversionsstruktur (15) in Längsrichtung (L) gesehen aussermittig zwischen der Dämpfungsstruktur (18) und der ersten Stirnfläche (12) angeordnet ist.

9. Ultraschallkomponente (1) nach einem der Ansprüche 1 bis 8, wobei auf der Schalleinleitungsseite (11) eine Vertiefung (20) mit einer Koppelfläche (21) zum Verbinden mit einer Schwingfläche eines Ultraschallkonverters (30) vorgesehen ist.

10. Ultraschallkomponente (1) nach einem der Ansprüche 1 bis 9, wobei an der Aussenfläche (17) des Körpers, insbesondere des Sonotrodenkörpers (10), insbesondere benachbart zu einem Bereich mit maximaler Amplitude der Querschwingungen, insbesondere zum Bereich der Dämpfungsstruktur (18), eine Schwingungsmasse (22) vorgesehen ist.

11. Ultraschallkomponente (1) nach einem der Ansprüche 1 bis 10, wobei der Körper, insbesondere der Sonotrodenkörper (10), einstückig ausgebildet ist und insbesondere aus Stahl, Titan oder einer Keramik ausgebildet ist.

12. Ultraschallkomponente (1) nach einem der Ansprüche 1 bis 11, wobei zwischen der ersten Stirnfläche (12) und der Konversationsstruktur (15) eine Entkopplungsstruktur (28) für torsionale Schwingungen vorgesehen ist.

13. Ultraschallkomponente (1) nach einem der Ansprüche 1 bis 12, wobei die Konversionsstruktur (15) durch Konversionsschlitze gebildet ist, welche ununterbrochen in die Dämpfungsschlitze (19) übergehen.

14. Vorrichtung (2) zum Bearbeiten von Werkstücken (W) mittels Ultraschalles, mit wenigstens einer Ultraschallkomponente nach einem der Ansprüche 1 bis 13, mit einem Konverter (30) zum Einleiten von longitudinalen Schwingungen (SL) in die Schalleinleitungsseite (11), mit einer Aufnahme (31) für ein zu bearbeitendes Werkstück (W) und mit einer Betätigungsvorrichtung (32) zu Bewegen der Ultraschallkomponente (1) gegen die Aufnahme (31) hin.

15. Verfahren zum Bearbeiten von Werkstücken (W) mittels Ultraschalles, insbesondere mit einer Ultraschallkomponente (1) nach einem der Ansprüche 1 bis 13, mit den Schritten
- Einleiten von longitudinalen Schwingungen (SL) an einer Schalleinleitungsseite (11) eines Körpers, insbesondere eines Sonotrodenkörpers (10), der Ultraschallkomponente (1),
- Transformieren der longitudinalen Schwingungen (SL) in Querschwingungen (ST1; ST2) mit einer Schwingungskomponente in einer Ebene (E) senkrecht zur Schwingungsrichtung der longitudinalen Schwingungen (SL) mittels einer Konversionsstruktur (15),
- Einleiten der Querschwingungen (SL1; SL2) in ein Werkstück (W) auf einer Bearbeitungsseite (13) des Körpers, insbesondere des Sonotrodenkörpers,
**dadurch gekennzeichnet, dass** die longitudinalen Schwingungen (SL) zwischen der Konversionsstruktur (15) und der Bearbeitungsseite (13) mittels einer insbesondere longitudinalen Dämpfungsstruktur (18) reduziert werden,
wobei die Dämpfungsstruktur (18) durch eine Materialschwächung im Körper, insbesondere im Sonotrodenkörper (10), gebildet ist, wobei die Materialschwächung in Form von Dämpfungsschlitzen (19) ausgebildet ist, welche sich in einer Richtung senkrecht zur Längsachse (L) erstrecken.

## Claims

1. Ultrasonic component, in particular a sonotrode (1) or booster, for processing workpieces (W) with ultrasonic vibrations,
comprising a body, in particular a sonotrode body (10), with a longitudinal axis (L),
wherein the body, in particular the sonotrode body (10), has a sound input side (11) with a first end face (12) and a processing side (13) with a second end face (14),
wherein on the sound input side (11) longitudinal vibrations (SL) can be introduced into the body, in particular the sonotrode body (10), in a direction parallel to the longitudinal axis (L),
wherein between the sound input side (11) and the processing side (13) a conversion structure (15) is arranged, by means of which transverse vibrations (ST1; ST2) with a vibration component in a plane (E) perpendicular to the longitudinal axis (L) can be generated from the longitudinal vibrations (SL),
**characterized in that** between the conversion structure (15) and the processing side (13) a damping structure (18) is provided, which reduces the longitudinal vibrations (SL) on the processing side (13),
wherein the damping structure (18) is formed by a material weakening in the body, in particular in the sonotrode body (10), wherein the material weakening of the damping structure (18) is designed in the form of damping slots (19), which extend in a direction perpendicular to the longitudinal axis (L).

2. Ultrasonic component (1) according to claim 1, wherein the body, in particular the sonotrode body (10), is designed wholly or partially as a hollow body.

3. Ultrasonic component (1) according to claim 1 or 2, wherein the body, in particular the sonotrode body (10), is designed to be rotationally symmetrical, in particular with a circular cross-section, and the transverse vibrations are torsional vibrations (ST).

4. Ultrasonic component (1) according to claim 3, wherein the body, in particular the sonotrode body (10), has an outer diameter (D) of less than a quarter of the longitudinal wavelength.

5. Ultrasonic component (1) according to one of claims 1 to 4, wherein the conversion structure (15) is designed in the form of material recesses (16) on the outer surface (17) of the body, in particular of the sonotrode body (10), which extend along a helical line (S), in particular in the form of conversion slots (16), wherein the helical line (S) preferably has an angle of 45° to the longitudinal axis (L).

6. Ultrasonic component (1) according to one of claims 1 to 5, wherein the damping structure (18) is arranged adjacent to a region of a maximum proportion of transverse vibrations (ST1; ST2).

7. Ultrasonic component (1) according to one of claims 1 to 6, wherein the conversion structure (15) extends over a length (k) of approx. 10% to 30%, preferably about 10% to 20% of the length (l) of the body, in particular of the sonotrode body (10).

8. Ultrasonic component (1) according to one of claims 1 to 7, wherein the conversion structure (15), viewed in the longitudinal direction (L), is arranged off-centre between the damping structure (18) and the first end face (12).

9. Ultrasonic component (1) according to one of claims 1 to 8, wherein on the sound input side (11) a recess (20) with a coupling surface (21) for connecting to a vibrating surface of an ultrasonic converter (30) is provided.

10. Ultrasonic component (1) according to one of claims 1 to 9, wherein a vibrating mass (22) is provided on the outer surface (17) of the body, in particular of the sonotrode body (10), in particular adjacent to a region with maximum amplitude of the transverse vibrations, in particular to the region of the damping structure (18).

11. Ultrasonic component (1) according to one of claims 1 to 10, wherein the body, in particular the sonotrode body (10), is of one-piece construction and is in particular made of steel, titanium or a ceramic.

12. Ultrasonic component (1) according to one of claims 1 to 11, wherein a decoupling structure (28) for torsional vibrations is provided between the first end face (12) and the conversion structure (15).

13. Ultrasonic component (1) according to one of claims 1 to 12, wherein the conversion structure (15) is formed by conversion slots, which merge uninterruptedly into the damping slots (19).

14. Apparatus (2) for processing workpieces (W) by means of ultrasound, with at least one ultrasonic component according to one of claims 1 to 13, with a converter (30) for introducing longitudinal vibrations (SL) into the sound input side (11), with a receptacle (31) for a workpiece (W) to be processed and with an actuating device (32) for moving the ultrasonic component (1) towards the receptacle (31).

15. Method for processing workpieces (W) by means of ultrasound, in particular with an ultrasonic component (1) according to one of claims 1 to 13, with the steps of
- introducing longitudinal vibrations (SL) at a sound input side (11) of a body, in particular a sonotrode body (10), of the ultrasonic component (1),
- transforming the longitudinal vibrations (SL) into transverse vibrations (ST1; ST2) with a vibration component in a plane (E) perpendicular to the direction of vibration of the longitudinal vibrations (SL) by means of a conversion structure (15),
- introducing the transverse vibrations (SL1; SL2) into a workpiece (W) on a processing side (13) of the body, in particular of the sonotrode body,
**characterized in that** the longitudinal vibrations (SL) are reduced between the conversion structure (15) and the processing side (13) by means of an in particular longitudinal damping structure (18),
wherein the damping structure (18) is formed by a material weakening in the body, in particular in the sonotrode body (10), wherein the material weakening is designed in the form of damping slots (19), which extend in a direction perpendicular to the longitudinal axis (L).

## Revendications

1. Composant à ultrasons, en particulier sonotrode (1) ou booster, pour usiner des pièces (W) avec des vibrations ultrasonores,
comprenant un corps, en particulier un corps de sonotrode (10), avec un axe longitudinal (L),
dans lequel le corps, en particulier le corps de sonotrode (10), présente un côté d'introduction du son (11) avec une première face frontale (12) et un côté d'usinage (13) avec une seconde face frontale (14),
dans lequel, sur le côté d'introduction du son (11), des vibrations longitudinales (SL) peuvent être introduites dans le corps, en particulier le corps de sonotrode (10), dans une direction parallèle à l'axe longitudinal (L),
dans lequel, entre le côté d'introduction du son (11) et le côté d'usinage (13), est agencée une structure de conversion (15), au moyen de laquelle des vibrations transversales (ST1; ST2) avec une composante de vibration dans un plan (E) perpendiculaire à l'axe longitudinal (L) peuvent être générées à partir des vibrations longitudinales (SL),
**caractérisé en ce que**, entre la structure de conversion (15) et le côté d'usinage (13), est prévue une structure d'amortissement (18) qui réduit les vibrations longitudinales (SL) sur le côté d'usinage (13),
la structure d'amortissement (18) étant formée par un affaiblissement de matériau dans le corps, en particulier dans le corps de sonotrode (10), l'affaiblissement de matériau de la structure d'amortissement (18) étant réalisé sous la forme de fentes d'amortissement (19) qui s'étendent dans une direction perpendiculaire à l'axe longitudinal (L).

2. Composant à ultrasons (1) selon la revendication 1, dans lequel le corps, en particulier le corps de sonotrode (10), est réalisé entièrement ou partiellement comme un corps creux.

3. Composant à ultrasons (1) selon la revendication 1 ou 2, dans lequel le corps, en particulier le corps de sonotrode (10), est réalisé à symétrie de révolution, en particulier avec une section transversale circulaire, et les vibrations transversales sont des vibrations de torsion (ST).

4. Composant à ultrasons (1) selon la revendication 3, dans lequel le corps, en particulier le corps de sonotrode (10), présente un diamètre extérieur (D) inférieur à un quart de la longueur d'onde longitudinale.

5. Composant à ultrasons (1) selon l'une des revendications 1 à 4, dans lequel la structure de conversion (15) est réalisée sous la forme d'évidements de matériau (16) sur la surface extérieure (17) du corps, en particulier du corps de sonotrode (10), qui s'étendent le long d'une ligne hélicoïdale (S), en particulier sous la forme de fentes de conversion (16), la ligne hélicoïdale (S) présentant de préférence un angle de 45° par rapport à l'axe longitudinal (L).

6. Composant à ultrasons (1) selon l'une des revendications 1 à 5, dans lequel la structure d'amortissement (18) est agencée de manière adjacente à une zone d'une proportion maximale de vibrations transversales (ST1; ST2).

7. Composant à ultrasons (1) selon l'une des revendications 1 à 6, dans lequel la structure de conversion (15) s'étend sur une longueur (k) d'environ 10 % à 30 %, de préférence d'environ 10 % à 20 % de la longueur (l) du corps, en particulier du corps de sonotrode (10).

8. Composant à ultrasons (1) selon l'une des revendications 1 à 7, dans lequel la structure de conversion (15), vue dans la direction longitudinale (L), est agencée de manière décentrée entre la structure d'amortissement (18) et la première face frontale (12).

9. Composant à ultrasons (1) selon l'une des revendications 1 à 8, dans lequel, sur le côté d'introduction du son (11), est prévu un évidement (20) avec une surface de couplage (21) pour la connexion à une surface vibrante d'un convertisseur à ultrasons (30).

10. Composant à ultrasons (1) selon l'une des revendications 1 à 9, dans lequel une masse vibrante (22) est prévue sur la surface extérieure (17) du corps, en particulier du corps de sonotrode (10), en particulier de manière adjacente à une zone avec une amplitude maximale des vibrations transversales, en particulier à la zone de la structure d'amortissement (18) .

11. Composant à ultrasons (1) selon l'une des revendications 1 à 10, dans lequel le corps, en particulier le corps de sonotrode (10), est réalisé d'une seule pièce et est en particulier réalisé en acier, en titane ou en une céramique.

12. Composant à ultrasons (1) selon l'une des revendications 1 à 11, dans lequel une structure de découplage (28) pour les vibrations de torsion est prévue entre la première face frontale (12) et la structure de conversion (15).

13. Composant à ultrasons (1) selon l'une des revendications 1 à 12, dans lequel la structure de conversion (15) est formée par des fentes de conversion, qui se prolongent sans interruption dans les fentes d'amortissement (19).

14. Dispositif (2) pour usiner des pièces (W) au moyen d'ultrasons, avec au moins un composant à ultrasons selon l'une des revendications 1 à 13, avec un convertisseur (30) pour introduire des vibrations longitudinales (SL) dans le côté d'introduction du son (11), avec un réceptacle (31) pour une pièce (W) à usiner et avec un dispositif d'actionnement (32) pour déplacer le composant à ultrasons (1) en direction du réceptacle (31).

15. Procédé pour usiner des pièces (W) au moyen d'ultrasons, en particulier avec un composant à ultrasons (1) selon l'une des revendications 1 à 13, avec les étapes consistant à
- introduire des vibrations longitudinales (SL) au niveau d'un côté d'introduction du son (11) d'un corps, en particulier d'un corps de sonotrode (10), du composant à ultrasons (1),
- transformer les vibrations longitudinales (SL) en vibrations transversales (ST1; ST2) avec une composante de vibration dans un plan (E) perpendiculaire à la direction de vibration des vibrations longitudinales (SL) au moyen d'une structure de conversion (15),
- introduire les vibrations transversales (SL1; SL2) dans une pièce (W) sur un côté d'usinage (13) du corps, en particulier du corps de sonotrode,
**caractérisé en ce que** les vibrations longitudinales (SL) sont réduites entre la structure de conversion (15) et le côté d'usinage (13) au moyen d'une structure d'amortissement (18) en particulier longitudinale,
la structure d'amortissement (18) étant formée par un affaiblissement de matériau dans le corps, en particulier dans le corps de sonotrode (10), l'affaiblissement de matériau étant réalisé sous la forme de fentes d'amortissement (19), qui s'étendent dans une direction perpendiculaire à l'axe longitudinal (L).
